# EUROPEAN PATENT SPECIFICATION

(11) **EP 4 424 573 B1**
(45) Date of publication and mention of the grant of the patent: **02.12.2026**
(21) Application number: 23202653.4
(22) Date of filing: 26.02.2019
(51) Int. Cl.: B62D 49/06, B62D 55/04, B62D 55/084, B62D 55/10, B62D 55/104

(54) **TRACK SYSTEM**
GLEISANLAGE
SYSTÈME DE VOIE

(30) Priority: 26.02.2018 US 201862635144 P
(43) Date of publication of application: 04.09.2024
(62) Document number(s) of the earlier application(s) in accordance with Art. 76 EPC: 19757532.7 / 3 759 013
(73) Proprietor: Soucy International Inc., Drummondville, Québec J2B 6W3 (CA)
(72) Inventor: SAUVAGEAU, Yves, Drummondville, J2B 3Y5 (CA); NANAC, Branislav, Drummondville, J2E 1T6 (CA); PEPIN, Pierre-Yves, Drummondville, J2B 8B8 (CA); ST-ARNAUD, Charles, Trois-Rivieres, G8Z 2X3 (CA); ALLIE, Styve, Drummondville, J2E 1P3 (CA)
(74) Representative: BCF Global

(56) References cited:
- US-A1- 2012 242 142
- US-A1- 2014 069 730
- US-B1- 6 401 847

## Description

The present application claims priority to United States Provisional Patent Application Serial No. 62/635,144, filed February 26, 2018, entitled *"Track System.*

### TECHNICAL FIELD

The present technology relates to track systems for vehicles.

### BACKGROUND

Certain vehicles, such as agricultural vehicles (*e.g*., harvesters, combines, tractors, agricultural implements, etc.) and construction vehicles (*e*.*g*., bulldozers, front-end loaders, etc.) for example, are used to perform work on ground surfaces that are soft, slippery and/or uneven (*e*.*g*., on soil, mud, sand, ice, snow, etc.).

Conventionally, such vehicles have had large wheels with tires on them to move the vehicle along the ground surface. Under certain conditions, such tires may have poor traction on some specific types of ground surface and, as these vehicles are generally heavy, the tires may compact the ground surface in an undesirable way owing to the weight of the vehicle. As an example, when the vehicle is an agricultural vehicle, the tires may compact the soil in such a way as to undesirably inhibit the growth of crops. In order to reduce the aforementioned drawbacks, to increase traction and to distribute the weight of the vehicle over a larger area on the ground surface, track systems were developed to be used in place of at least some of the wheel and tire assemblies on the vehicles.

Such conventional track systems designed for agricultural vehicles typically have a frame supported (at least indirectly) by the vehicle's chassis, a drive sprocket rotationally supported on the frame and operatively connected to the engine of the vehicle to drive an endless track, leading and trailing idler wheels rotationally supported at each end of the frame and mid-rollers rotationally supported by the frame between the leading and trailing idler wheels. Maintaining proper alignment of the various wheels of such prior art track systems is often a challenge, and wheel misalignment typically results in increased rates of wear of one or more components of the track systems, such as the endless track of the track systems.

Some prior art track systems allow for wheel alignment adjustments. For example, U.S. Patent No. 6,401,847 B1 discloses an undercarriage support system for a tracked vehicle having a drive wheel with a rotational axis comprising first and second elongated outwardly extending members couplable to the vehicle, a first undercarriage bearing support couplable to the vehicle between said first and second outwardly extending members and configured to support an undercarriage, an undercarriage bearing support member slidingly couplable to the outer ends of the two support members and having a second undercarriage bearing support configured to support an undercarriage.
Document US 2014/069730 concerns a semi-generic steering knuckle adapter assembly providing predetermined attachment locations for installing a wheel-replacing track system on a steering knuckle.
The adapter assembly comprises one or more customized adapting members (e.g. frame(s), plate(s)) configured to be mounted to the steering knuckle of a vehicle, and a generic supporting member (e.g. frame, plate) configured to be mounted to the adapting member(s) and comprising the predetermined attachment locations where the support frame of the track system can be releasably yet rigidly secured.
By providing predetermined and preconfigured attachment locations where the wheel-replacing track system can be secured, the adapter assembly allows the track system to be mounted to the vehicle while avoiding attachment at inconvenient and/or weak locations.

While prior art adjustable track systems are suitable for their intended purposes, they have drawbacks. For example, some prior art track systems, such as the system described in U.S. Patent No. 6,401,847 B1, provide for wheel alignment adjustments that may reduce stresses and/or wear on some parts, such as the endless track, but in so doing may also in at least some applications increase stresses on other parts of the track system, such as edge stress between a pin and a bushing used to provide for the wheel alignment adjustments, due to misalignment of the pin relative to the bushing resulting from the wheel alignment adjustments for example. Therefore, improvements are possible.

### SUMMARY

It is therefore an object of the present technology to ameliorate at least one of the inconveniences present in the prior art.

According to an aspect of the present technology, there is provided a track system for attachment to a vehicle, the track system comprising: a primary wheel structured to be rotationally attachable to the vehicle, the primary wheel having an inboard-facing side and an outboard-facing side opposite the inboard-facing side, the inboard-facing side facing toward the vehicle when the primary wheel is rotationally attached to the vehicle; a frame rotationally supporting a plurality of secondary wheels, the frame defining a recess therein, the recess having a rearwardly-facing surface, a forwardly-facing surface facing the rearwardly-facing surface, and an upwardly-facing surface intermediate the rearwardly-facing surface and the forwardly-facing surface; a sub-frame received in the recess of the frame, the sub-frame having a downwardly-facing surface that is supported on the upwardly-facing surface of the frame, the sub-frame and the rearwardly-facing surface of the frame defining a first gap therebetween, the sub-frame and the forwardly-facing surface of the frame defining a second gap therebetween, the sub-frame rotationally supporting the primary wheel, the primary wheel and the plurality of secondary wheels supporting an endless track around the primary wheel and the plurality of secondary wheels; and a fastener securing the frame to the sub-frame in a neutral position, the fastener being disengageable, the first and second gaps being dimensioned to allow the frame to pivot and translate relative to the sub-frame from the neutral position to a plurality of different positions when the fastener is disengaged, the fastener being re-engageable to secure the frame to the sub-frame in any one of the plurality of different positions.

In some implementations, the primary wheel is in driving engagement with the endless track.

In some implementations, the downwardly-facing surface of the frame is planar; the upwardly-facing surface of the frame is planar; and the downwardly-facing surface of the sub-frame is received on the upwardly-facing surface of the frame when the frame is secured to the sub-frame in any one of the plurality of different adjustment positions.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects, and advantages of embodiments of the present technology will become apparent from the following description, the accompanying drawings, and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a perspective view of an outboard-facing side of a track system;
Figure 2 a perspective view of an inboard-facing side of the track system of Figure 1;
Figure 3 is a close-up a perspective view of a central part of the track system of Figure 1 on the outboard-facing side, with some parts of the track system being removed to better show some parts of the track system;
Figure 4 is a different close-up perspective view of the central part of the track system of Figure 1 on the outboard-facing side, with some parts of the track system being removed to better show some parts of the track system;
Figure 5 is a close-up yet another perspective view of the central part of the track system of Figure 1 on the outboard-facing side, with a washer of one of a plurality of bolts being removed to better show an aperture in which that one of the plurality of bolts is received;
Figure 6 is a top plan view of the central part of the track system of Figure 1, with an endless track of the track system being removed to better show some parts of the track system;
Figure 7 is the top plan view of the central part of the track system of Figure 6, with the endless track and some additional parts of the track system being removed to better show some parts of the track system;
Figure 8 is a perspective view of an outboard-facing side of another implementation of the track system of Figure 1;
Figure 9 is a close-up a perspective view of a central part of the track system of Figure 8 on the outboard-facing side, with some parts of the track system being removed to better show some parts of the track system;
Figure 10 is a different close-up perspective view of the central part of the track system of Figure 8 on the outboard-facing side, with some parts of the track system being removed to better show some parts of the track system;
Figure 11 is an exploded perspective view of yet another implementation of the track system of Figure 1; and
Figure 12 is a perspective view taken from a rear, top, left side of the track system of Figure 11, with a frame of the track system being in a different toe-in-toe-out position.

### DETAILED DESCRIPTION

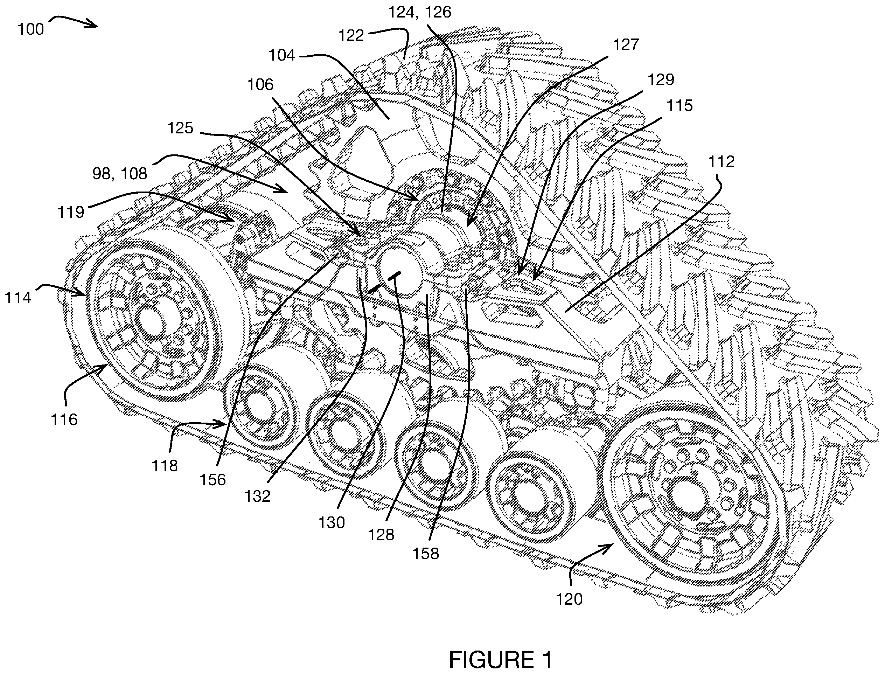

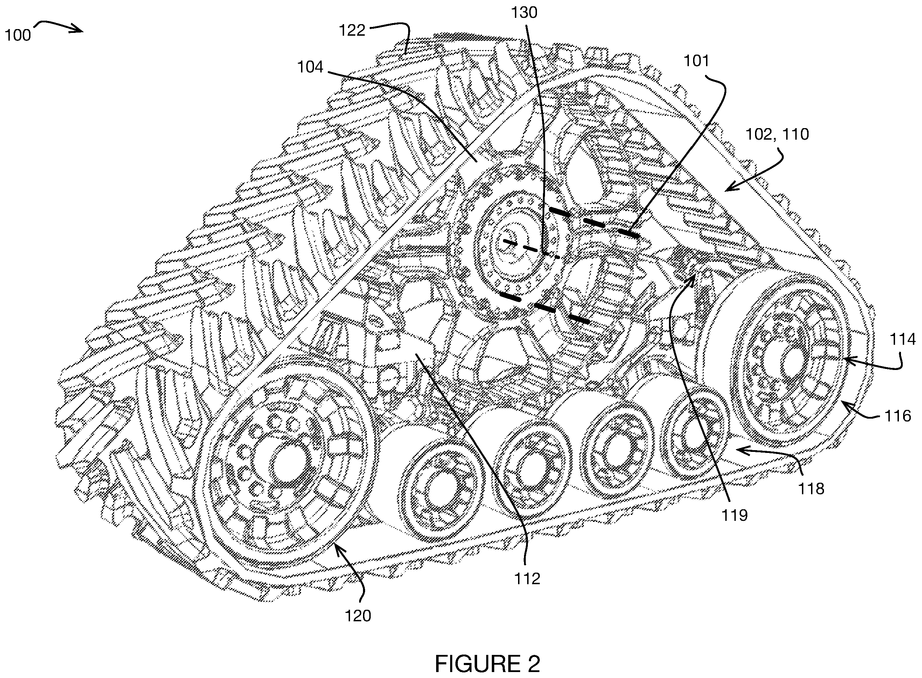

Figures 1 and 2 show a track system 100 for attachment to a vehicle. Figure 1 shows an outboard-facing side 98 of the track system 100 that faces laterally away from the vehicle when the track system 100 is attached to the vehicle. Figure 2 shows an inboard-facing side 102 of the track system 100 that faces toward the vehicle when the track system 100 is mounted to the vehicle.

The track system 100 includes a primary wheel 104 structured to be attachable to a rotatable shaft 101 (shown schematically in Figure 2) of a vehicle by coaxial attachment to a wheel hub (not shown) supported on an outer end of the rotatable shaft 101 of the vehicle. The coaxial attachment is provided by a plurality of bolts (not shown) received through a corresponding plurality of apertures 106 defined through the primary wheel 104, and into corresponding threaded apertures (not shown) in the wheel hub of the vehicle, similar to the attachment of a vehicle's wheel to a wheel hub of that vehicle. In one application, the wheel hub is an existing wheel hub of the vehicle, and the track system 100 replaces the original wheel that was supported by the wheel hub of the vehicle.

The rotatable shaft 101 could be a drive shaft or an idle (non-driven) shaft of a vehicle. It is contemplated that the primary wheel 104 could be attachable to any suitable structure of a vehicle, such as to a planetary gearbox output flange or shaft of a vehicle, or a final drive of a vehicle. It is also contemplated that the primary wheel 104 could be structured to be attachable directly to a shaft of a vehicle for example. Examples of suitable vehicles include a combine and a tractor.

In the present implementation, the primary wheel 104 is a drive sprocket 104 that has an outboard-facing side 108 and an inboard-facing side 110 opposite outboard-facing side 108. The inboard-facing side 110 of the primary wheel 104 faces toward the vehicle when the primary wheel 104 is attached to the rotatable shaft 101 of the vehicle.

The track system 100 further includes a frame 112 rotationally supporting a plurality of secondary wheels 114 thereon. In the present implementation, the plurality of secondary wheels 114 includes a pair of leading idler wheels 116, four pairs of mid-roller wheels 118, further herein referred to as mid-rollers 118, and a pair of trailing idler wheels 120. The leading idler wheels 116 are positioned at a front end of the frame 112. The trailing idler wheels 120 are positioned at a rear end of the frame 112.

The mid-rollers 118 are positioned intermediate the leading idler wheels 116 and the trailing idler wheels 120. The primary wheel 104 is positioned above the leading idler wheels 116, the trailing idler wheels 120, and the mid-rollers 118. The secondary wheels 114 are symmetrically positioned on the frame 112 relative to the primary wheel 104 on the outboard-facing side 98 of the track system 100.

The primary wheel 104 and the secondary wheels 114 support an endless track 122 thereabout, and the primary wheel 104 is in driving engagement with the endless track 122. The track system 100 further includes a tensioner assembly 119 connecting the frame 112 to the leading idler wheels 116 and being operable to adjust tension in the endless track 122. It is contemplated that the tensioner assembly 119 could be located in a different part of the track system 100 and could operatively connect other wheels thereof to the frame 112 so as to make the position of those wheels selectively adjustable relative to the frame 112 for adjusting tension in the endless track 122. It is contemplated that any suitable tensioner assembly could be used.

It is contemplated that a different arrangement of the primary wheel 104 and/or the secondary wheels 114 could be used. It is contemplated that the primary wheel 104 need not be in driving engagement with the endless track 122, such as in implementations in which the track system 100 is to be attached (via the primary wheel 104) to a non-driven shaft of a vehicle. It is also contemplated that the primary wheel 104 could be a different type of wheel and not necessarily the drive sprocket 104.

In the present implementation, the primary wheel 104 is rotationally supported by a sub-frame 124, and the sub-frame 124 is in turn supported by the frame 112 of the track system 100. The sub-frame 124 in this implementation is cast as a single piece from a suitable metal and defines a cylindrical cavity (not shown) therein. A shaft (not shown) of the drive sprocket 104 is rotationally received in the cavity via a bearing assembly (not shown). It is contemplated that the sub-frame 124 could have a different construction, including a multi-part construction.

The shaft of the drive sprocket 104 that rotates inside the cylindrical cavity in the sub-frame 124 defines a rotation axis 130 of the drive sprocket 104. The sub-frame 124 and the shaft of the drive sprocket 104 are positioned on the outboard-facing side 108 of the drive sprocket 104. The shaft of the drive sprocket 104 extends from the outboard-facing side 108 of the drive sprocket 104 and into the cavity. The shaft of the drive sprocket 104 is secured in the cylindrical cavity of the sub-frame 124.

Accordingly, the drive sprocket 104 is secured to the sub-frame 124 and is rotatable relative to the sub-frame 124 about the rotation axis 130. The rotation axis 130 extends in a transverse direction when the primary wheel 104 is attached to the rotatable shaft 101 of the vehicle and the vehicle and the track system 100 are stationary on planar horizontal terrain. It is contemplated that a different rotational and/or securement attachment of the drive sprocket 104 to the sub-frame 124 could be used. It is also contemplated that the sub-frame 124 and/or the shaft of the drive sprocket 104 could be positioned at least in part, and in some implementations completely, on the inboard-facing side 110 of the primary wheel 104.

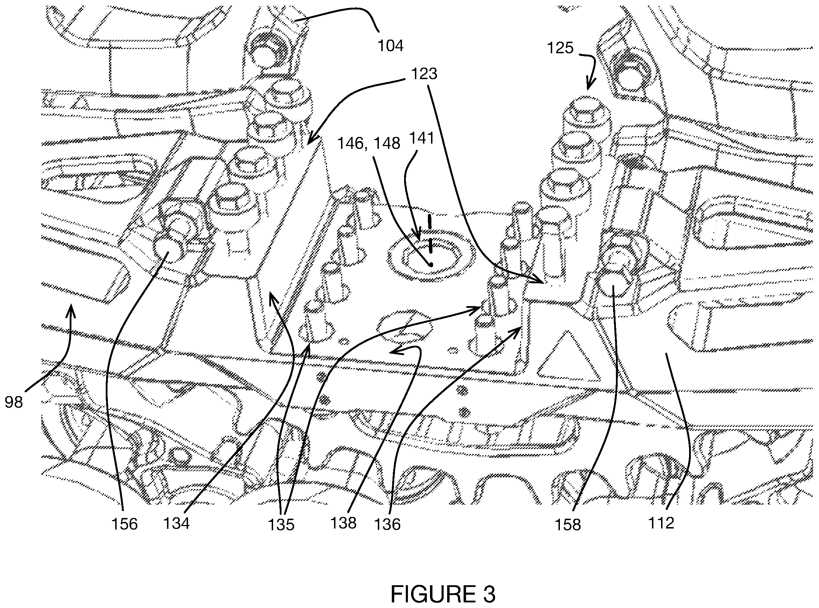

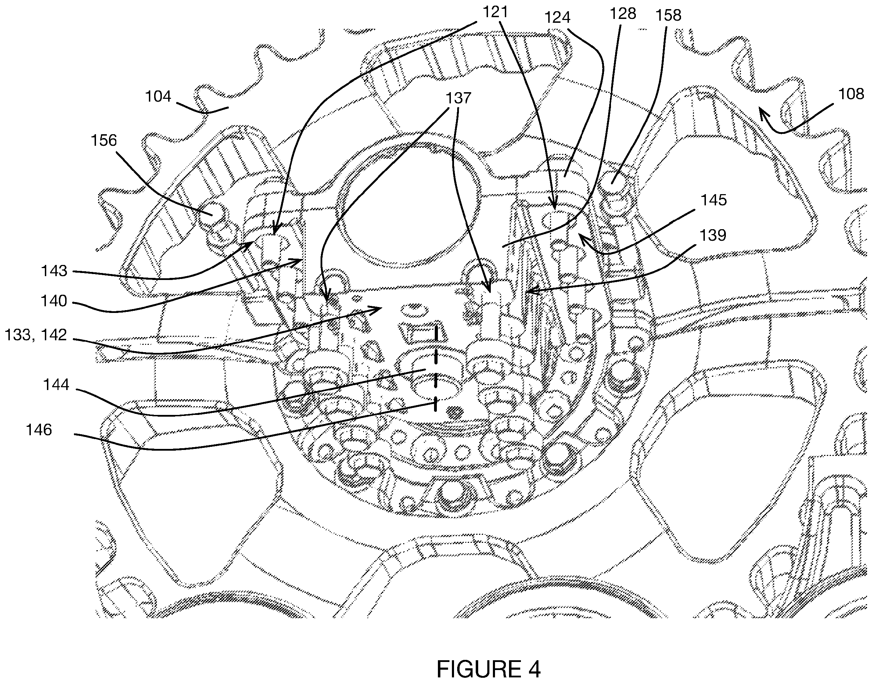

The sub-frame 124 is received in a recess 132 defined in a top side 115 of the frame 112 and is attached to the frame 112 via sixteen fasteners 125 which secure the frame 112 to the sub-frame 124 and prevent pivoting (described in more detail herein below) of the frame 112 relative to the sub-frame 124. In the present implementation, the fasteners 125 are bolts 125, fitted with custom heavy duty washers under the cap of each one of the bolts 125. Eight of the bolts 125 are received through a plurality of apertures 121 (Figure 4) defined in a top side 127 of the sub-frame 124 and in corresponding ones of threaded apertures 123 (Figure 3) defined in a top side 129 of the frame 112.

The other eight of the bolts 125 are received through a plurality of apertures 135 (Figure 3) defined in a bottom side 131 of the frame 112 and in corresponding ones of threaded apertures 137 (Figure 4) defined in a bottom side 133 of the sub-frame 124. The bolts 125 are tightened to attach the frame 112 to the sub-frame 124 and thereby immobilize the frame 112 relative to the sub-frame 124. Each of the bolts 125 extends vertically in the frame 112 and the sub-frame 124 when the primary wheel 104 is attached to the rotatable shaft 101 of the vehicle and the vehicle and the track system 100 are stationary on planar horizontal terrain. It is contemplated that a different number and/or type and/or arrangement of the fasteners 125 could be used.

As best shown in Figure 3, in the present implementation, the recess 132 is defined by a rearwardly-facing surface 134, a forwardly-facing surface 136, and an upwardly-facing surface 138 of the frame 112. The rearwardly-facing surface 134 faces the forwardly-facing surface 136 and is a mirror image of the forwardly-facing surface 136. It is contemplated that the rearwardly-facing surface 134 need not be a mirror image of the forwardly-facing surface 136.

It is also contemplated that the recess 132 could be defined in a different part of the frame 112. In the present implementation, the upwardly-facing surface 138 is planar and defines a cavity 141 therein. In the present implementation, the cavity 141 is cylindrical and extends downward into, and through, the frame 112 in a vertical direction 146. It is contemplated that the cavity 141 could have a different shape. It is contemplated that the cavity 141 could terminate within the frame 112.

Now referring to Figure 4, a lower portion 128 of the sub-frame 124 is defined by rearwardly-facing surface 139, a forwardly-facing surface 140, a downwardly-facing surface 142, and downwardly-facing surfaces 143, 145 of corresponding flanges of the sub-frame 124. In the present implementation, the rearwardly-facing surface 139 is opposite the forwardly-facing surface 140 and is a mirror image thereof.

It is contemplated that the rearwardly-facing surface 139 need not be a mirror image of the forwardly-facing surface 140. In the present implementation, the downwardly-facing surface 142 is planar and is received on, and contacts, the upwardly-facing surface 138. In other words, the downwardly-facing surface 142 mates with the upwardly-facing surface 138. It is contemplated that the downwardly-facing surface 142 and the upwardly-facing surface 138 could have other mating surface shapes, such as mating concave shapes.

A pivot member 144 extends downward in a vertical direction 146 from the downwardly-facing surface 142 of the sub-frame 124. In the present implementation, the pivot member 144 is a cylindrical metal pivot pin 144 that is cast integral with the sub-frame 124. It is contemplated that the pivot member 144 could have a different geometry and/or construction and could include a bearing for example that would achieve the functionality described herein. It is also contemplated that the pivot member 144 could be a piece separate from the sub-frame 124.

The pivot pin 144 is positioned between the sub-frame 124 and is received in the cavity 141 of the frame 112. In the present implementation, the bottom end of the pivot pin 144 does not abut against any surface and therefore is relieved in that the weight of the sub-frame 124 is transferred into the frame 112 via the downwardly-facing surfaces 142, 143, 145 of the sub-frame 124. It is contemplated that in some implementations in which the cavity 141 terminates in the frame 112, at least some of the weight of the sub-frame 124 could be transferred into the frame 112 via the pivot pin 144.

It is contemplated that the sub-frame 124 could be shaped differently, such that at the weight of the sub-frame 124 could be transferred into the frame 112 via the downwardly-facing surface 142 and not via the downwardly-facing surfaces 143, 145 for example. It is also contemplated that the pivot member 144 could extend upward from the frame 112 in the vertical direction 146 and the cavity 141 could be defined in the downwardly-facing surface 142 of the sub-frame 124 for example.

In the present implementation, there is a slight clearance between the outer side surface of the pivot pin 144 and the inner side surface of the cavity 141, which clearance permits the pivot pin 144 to pivot clockwise and counter-clockwise within the cavity 141. The pivot pin 144 thereby defines a pivot axis 148 about which the frame 112 can pivot relative to the sub-frame 124 when the bolts 125 are disengaged by being loosened or removed. As shown, in the present implementation the pivot axis 148 extends in the vertical direction 146 and passes through the rotation axis 130 of the primary wheel 104. It is contemplated that in some implementation, the pivot axis 148 could be offset from the rotation axis 130 of the primary wheel 104.

The rearwardly-facing surface 134 and the forwardly-facing surface 136 of the are recess 132 are shaped and spaced from each other such that when the sub-frame 124 is received in the recess 132, the rearwardly-facing surface 139 and the forwardly-facing surface 140 of the sub-frame 124 are spaced from the rearwardly-facing surface 134 and the forwardly-facing surface 136 of the are recess 132, respectively.

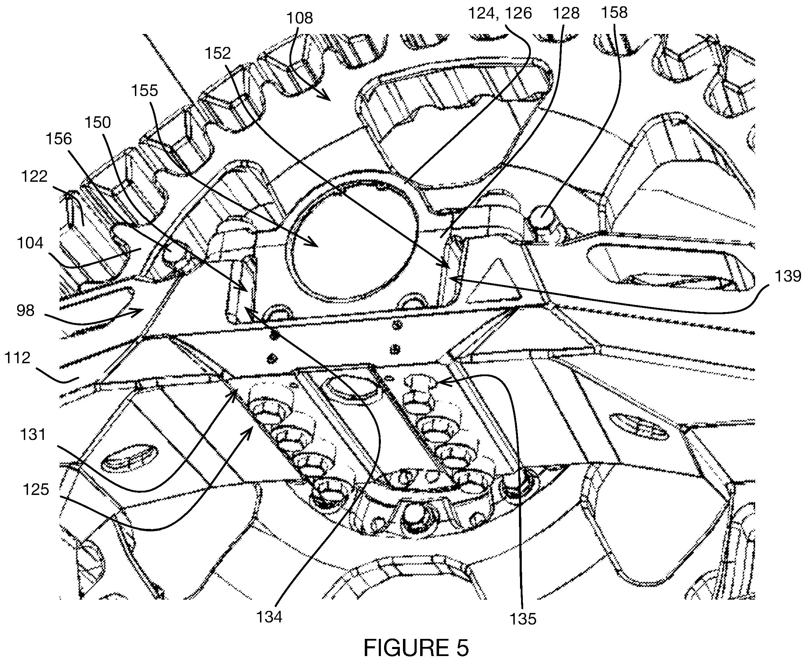

Now referring to Figure 5, this way, the sub-frame 124 and the frame 112 define two gaps 150, 152 between the sub-frame 124 and the frame 112, and more particularly between the corresponding ones of the surfaces 134, 136, 139, 140 to permit for the pivoting of the frame 112 relative to the sub-frame 124 when the bolts 125 are loosened or removed. To this end, the apertures 135 defined in the bottom side of the frame 112 are larger than the corresponding threaded apertures 137 defined in the bottom side of the sub-frame 124. Similarly, the apertures 121 defined in the top side of the sub-frame 124 are larger than the corresponding threaded apertures 123 defined in the top side of the frame 112.

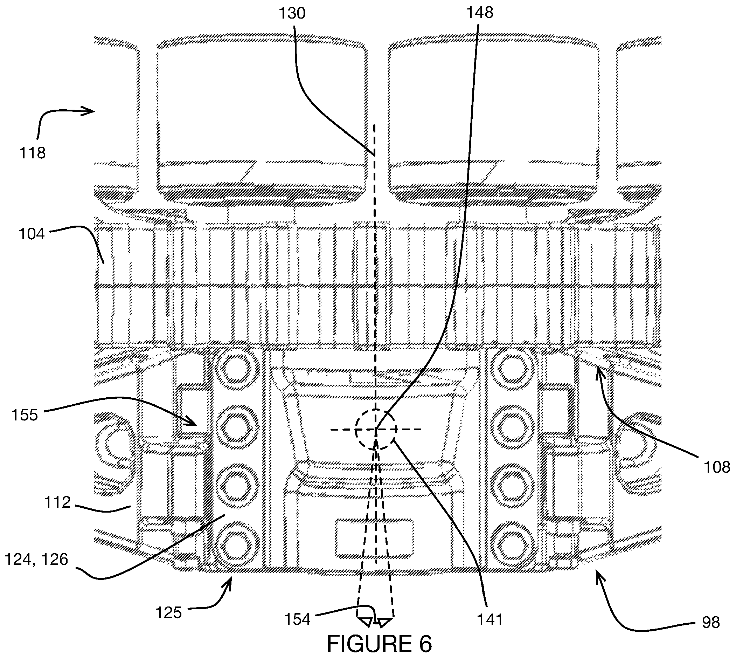

These larger apertures 121, 135 are sized large enough to allow the frame 112 to pivot relative to the sub-frame 124 about the pivot axis 148 when the bolts 125 are loosened or removed, until at least one of the side surfaces 134, 136 of the recess 132 abuts against a corresponding one of the side surfaces 139, 140 of the sub-frame 124. In this way, the gaps 150, 152, and more particularly their geometries, define a pivot range 154, shown schematically in Figure 6, of the frame 112 about the pivot axis 148 within which the frame 112 is pivotable relative to the sub-frame 124 in any one of clockwise and counter-clockwise directions about the pivot axis 148 when the bolts 125 are loosened or removed.

In the present implementation, the pivot range 154 is 5 degrees about the pivot axis 148, or 2.5 degrees in either one of the clockwise and counter-clockwise directions about the pivot axis 148 from a neutral position 155 of the frame 112 shown in Figures 5 and 6. In other words, in the present implementation, the pivot range 154 is symmetric about the pivot axis 148 relative to the neutral position 155 of the frame 112. It is contemplated that the pivot range 154 could be different. For example, in some implementations, the pivot range 154 is 0.5 degrees. As another example, in some implementations, the pivot range 154 is ten degrees. It is contemplated that the pivot range 154 in some implementations could by asymmetric relative to the neutral position 155 of the frame 112.

It is contemplated that the larger apertures 121, 135 could be sized differently, including being sized to define the pivot range 154 together with or instead of the gaps 150, 152. That is, it is contemplated that the larger apertures 121, 135 could be sized such that when the frame 112 is pivoted about the pivot axis 148 in a given direction, after a given amount of pivoting in the given direction, one or more of the bolts 125 would contact one or more corresponding surfaces defining the larger apertures 121, 135 and thereby prevent further pivoting of the frame 112 in that direction before at least one of the surfaces 139, 140 of the sub-frame 124 engages a corresponding one of the opposed surfaces 134, 136 of the recess 132 to prevent further pivoting of the frame 112 in that direction.

It is contemplated that any other features, including stoppers or shims for example, could be used to define the pivot range 154 of the frame 112 instead of or in addition to the surfaces 134, 136 of the recess 132 and/or the dimensions, shapes and relative positions of the apertures 121, 135. It is contemplated that one or more of the larger apertures 121, 135 could have a different shape. It is also contemplated that at least some corresponding pairs of the apertures 121, 123, 135, 137 could extend completely through both the frame 112 and the sub-frame 124.

It is contemplated that in some such cases, one or more different types of fasteners could be used, such as for example bolt-and-nut combinations instead of the bolts 125 to compress the frame 112 and the sub-frame 124 together and to thereby secure the frame 112 to the sub-frame 124 and immobilize the frame 112 relative to the sub-frame 124. It is contemplated that one or more different types of fasteners could be used in any particular implementation of the track system 100 instead of, in combination with, or in addition to the bolts 125.

In the present implementation, when the primary wheel 104 is attached to a rotatable shaft 101 of a vehicle and the vehicle and the track system 100 are stationary on planar horizontal terrain and the track system 100 thereby bears at least part of the vehicle's weight, the upwardly-facing surface 138 of the frame 112 and the downwardly-facing surface 142 of the sub-frame 124 are horizontal (parallel to the planar horizontal terrain) and the pivot axis 148 is vertical. When the bolts 125 are disengaged (that is, loosened or removed) the frame 112 can be pivoted relative to the sub-frame 124 about the pivot axis 148, in which case the downwardly-facing surface 142 of the sub-frame 124 pivots relative to the upwardly-facing surface 138 of the frame 112.

In an aspect, the horizontal orientation of the surfaces 138, 142 and the vertical orientation of the pivot axis 148 help establish alignment of the endless track 122 during adjustments of the relative position of the frame 112 to the sub-frame 124. It is contemplated that in some implementations, the surfaces 138, 142 could have some offset from horizontal, such as by 0.1 or 0.2 degrees for example. It is also contemplated that the pivot axis 148 could have some corresponding offset from vertical, such as by 0.1 or 0.2 degrees for example. In some applications, angle shims or other similar elements could be added in between the frame 112 and the sub-frame 124 to change an orientation of the frame 112 relative to the sub-frame 124.

In the present implementation, the track system 100 includes a pair of adjustment bolts 156, 158. The adjustment bolts 156, 158 are received through corresponding threaded apertures defined laterally through the frame 112 and at their ends abut against corresponding outboard-facing surfaces of the sub-frame 124 on opposite sides of the rotation axis 130 of the primary wheel 104. The adjustment bolt 156 is positioned forward of the pivot axis 148. The adjustment bolt 158 is positioned rearward of the pivot axis 148.

When the bolts 125 are disengaged, the position of the frame 112 relative to the sub-frame 124, further herein referred to as the toe-in-toe-out position of the frame 112, can be adjusted by turning, with a suitable tool such as a wrench for example, the adjustment bolts 156, 158 in opposite directions about their respective rotation axes, when the track system 100 is lifted off terrain for example, to pivot the frame 112 relative to the sub-frame 124 in either one of clockwise and counter-clockwise directions about the pivot axis 148.

In some implementations and applications of the track system 100, and depending on the vehicle for example, the toe-in-toe-out position of the frame 112 can be adjusted by turning, with a suitable tool such as a wrench for example, the adjustment bolts 156, 158 in opposite directions about their respective rotation axes when the track system 100 is mounted to the vehicle and stationary on terrain.

Once the toe-in-toe-out position of the frame 112, and therefore also an alignment of the wheels 104, 116, 118, 120 relative to each other as well as an alignment of the endless track 122 relative to the wheels 104, 116, 118, 120, are suitably adjusted, all of the bolts 125 are re-tightened to immobilize the frame 112 relative to the sub-frame 124. After all of the bolts 125 are re-tightened, the adjustment bolts 156, 158 could be left in their corresponding positions, or loosened until the ends of the adjustment bolts 156, 158 no longer contact the sub-frame 124 without materially affecting securement of the frame 112 relative to the sub-frame 124.

In other words, in the present implementation, the adjustment bolts 156, 158 are relieved in that a majority of forces that may be transferred between the frame 112 and the sub-frame 124 when the track system 100 is in use are carried by the bolts 125 and engagement of the adjustment bolts 156, 158 with the sub-frame 124 is not required to hold the sub-frame 124 in place relative to the frame 112. It is contemplated that a different arrangement of the adjustment bolts 156, 158 and/or the bolts 125 could be used in which at least one of the adjustment bolts 156, 158 would assist in immobilizing the frame 112 relative to the sub-frame 124 more than they do in the present implementation.

Each of the adjustment bolts 156, 158 is an example of a threaded member. It is contemplated that a different number of and/or arrangement and/or type of threaded members could be used. The adjustment bolts 156, 158 are an example of an adjustment assembly used to assist an operator in adjusting the toe-in-toe-out position of the frame 112. It is contemplated that a different arrangement of and/or a different position of and/or a different adjustment assembly could be used. It is also contemplated that the adjustment assembly could be omitted.

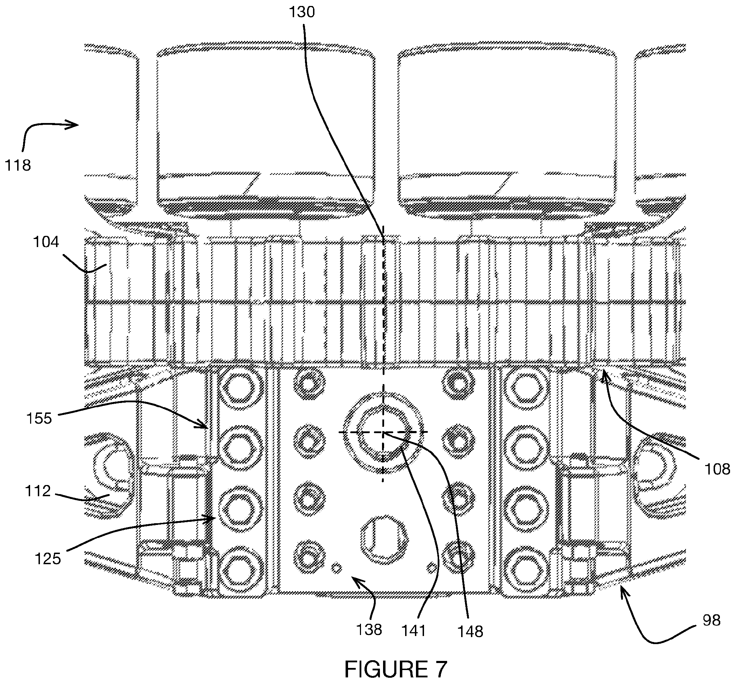

Referring to Figures 6 and 7, a top plan view of a central part of the track system 100 is shown. In both of these figures the endless track 122 is removed to better show other parts of the track system 100 and the endless track 122 is instead shown schematically with hidden lines. In Figure 7, both the endless track 122 and the sub-frame 124 are removed to better show other parts of the track system 100, and a position of the cavity 141, and therefore also the pivot member 144, relative to the frame 112 and the drive sprocket 104.

While a particular relative position of the cavity 141 and the pivot member 144 is shown, it is contemplated that in some implementations, the position of the pivot member 144 and the cavity 141 relative to the frame 112 and the sub-frame 124 could be different, to suit different implementations and/or applications of the track system 100 for example. For example, it is contemplated that the cavity 141 and the pivot member 144, and hence the pivot axis 148, could be offset forward or rearward of the rotation axis 130 of the drive sprocket 104. It is also contemplated that the cavity 141 and the pivot member 144, and hence the pivot axis 148, could be closer to the outboard-facing side 98 of the track system 100, or the inboard-facing side 102 of the track system 100.

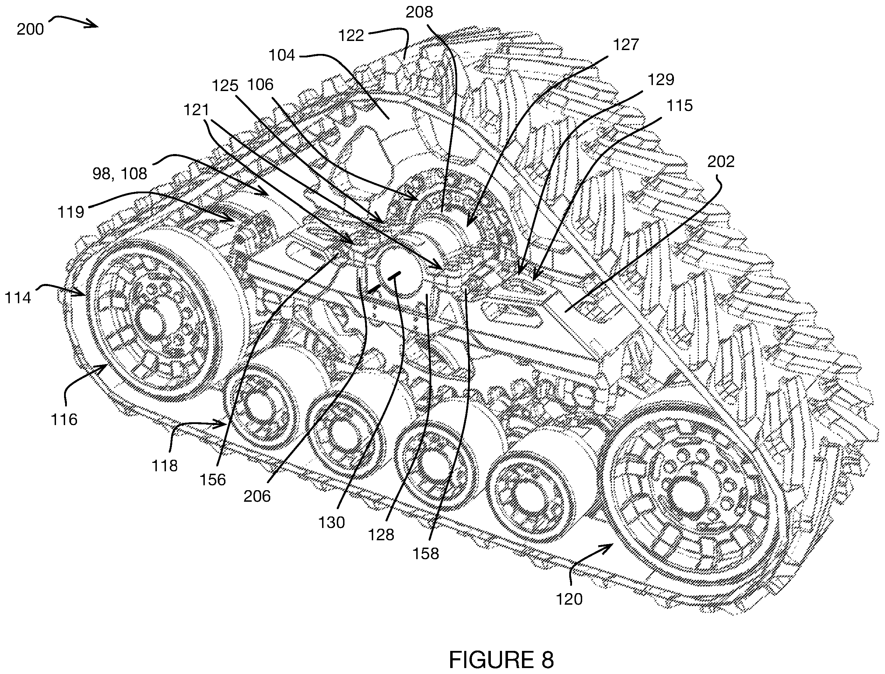

Reference is now made to Figures 8 to 10, which show a track system 200, which is a different implementation of the track system 100. Elements of the track system 200 that are similar to those of the track system 100 have been labeled with the same reference numerals and will not be described herein in more detail.

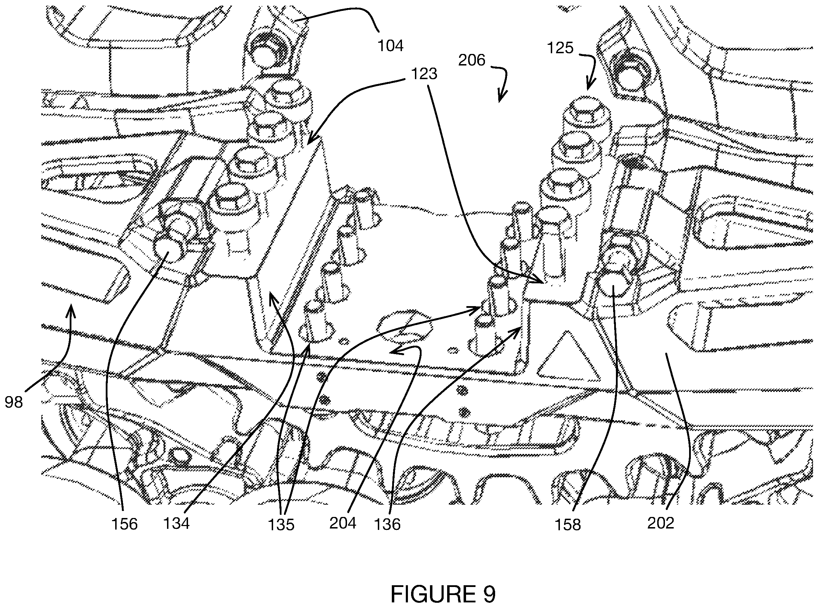

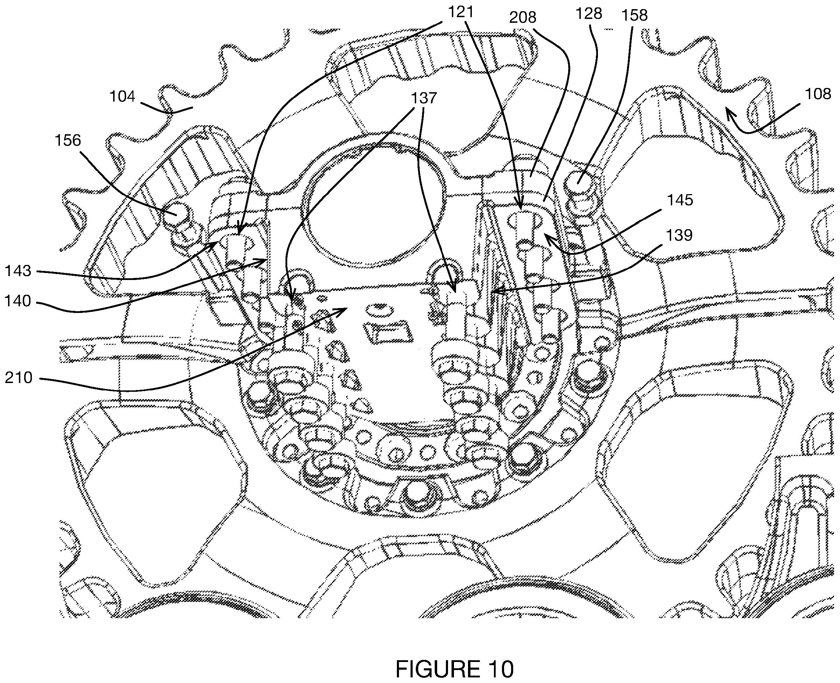

As shown in Figure 9, the frame 202 of the track system 200 is different than the frame 112 of the track system 100 in that it does not have the cavity 141 defined through the upwardly-facing surface 204 of the recess 206. As shown in Figure 10, the sub-frame 208 of the track system 200 is different than the sub-frame 124 of the track system 100 in that the sub-frame 208 lacks the pivot member 144 of the sub-frame 124.

Accordingly, when the sub-frame 208 is received in the recess 206, the downwardly-facing surface 210 of the sub-frame 208 is received on the upwardly-facing surface 204 of the recess 206 without defining a vertically extending pivot axis 148 the position of which would be fixed relative to the frame 112.

Instead, when the bolts 125 of the track system 200 are disengaged, for example by being loosened, the position of the frame 202 relative to the sub-frame 208 can be adjusted by pivoting the frame 202 relative to the sub-frame 208 and/or translationally moving (in longitudinal and/or transverse directions) the frame 202 relative to the sub-frame 208, manually and/or using the adjustment bolts 156, 158.

In this implementation, the adjustment bolts 156, 158 could be omitted in which case the pivoting and/or translational adjustments to the position of the frame 202 relative to the sub-frame 208 could be done manually after the track system 200 is mounted onto a vehicle and is lifted off terrain, for example by lifting a corresponding part of the vehicle off terrain, and after the bolts 125 are loosened.

In this implementation, when the bolts 125 are loosened, the range of pivoting adjustments and/or longitudinal transverse adjustments to the position of the frame 202 relative to the sub-frame 208 are limited by the sidewalls of the recess 206 engaging the sidewalls of the sub-frame 208 after a given amount of pivoting and/or longitudinal transverse movement, and the range of transverse translational adjustments is limited by the size of the larger ones 121, 135 of the apertures 121, 123, 135, 137 the sidewalls of which engage one or more of the bolts 125 after a given amount of transverse translational movement of the frame 202 and thereby prevent further transverse translational movement.

It is contemplated that the recess 206 and/or the larger apertures 121, 135 could be structured different such that a different combination of the sidewalls of the recess 206 and/or the sidewalls of the apertures 121, 135 could limit the pivoting and/or longitudinal and/or transverse movement ranges of the frame 202 relative to the sub-frame 208.

Once the frame 202 has been pivoted and/or translationally moved relative to the sub-frame 208 to obtain a desired alignment between the frame 202 and the sub-frame 208, the bolts 128 of the track system 200 are re-tightened (or, re-engaged) to secure the frame 202 in its new position. In this way, the toe-in-toe-out position of the frame 202 and/or the lateral position of the frame 202 relative to the sub-frame 208 can be adjusted and set.

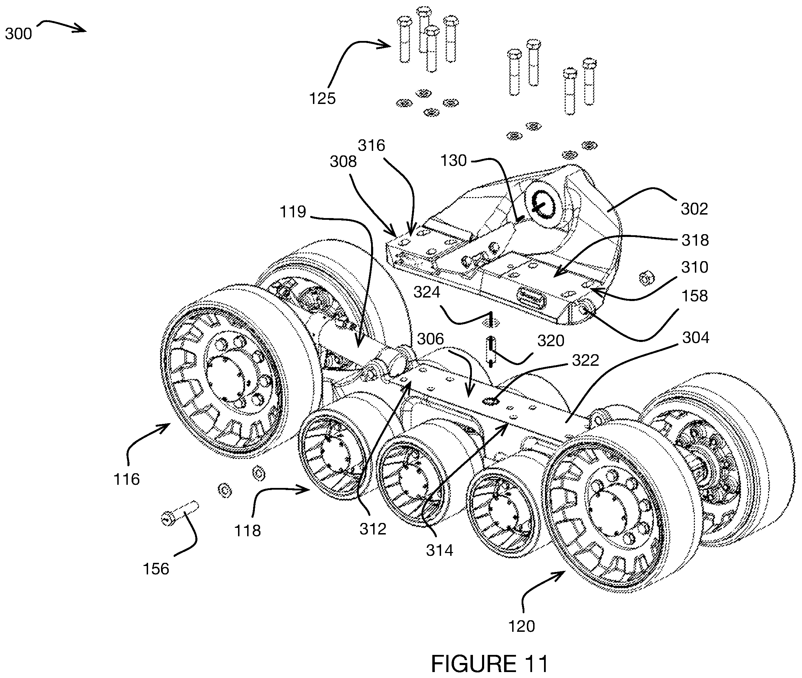

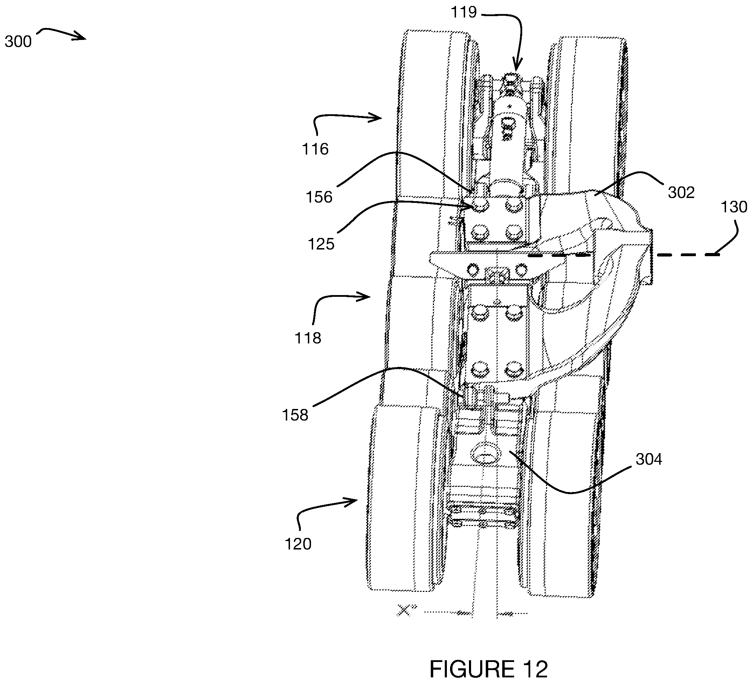

Reference is now made to Figures 11 and 12, which show a track system 300, which is yet another different non-limiting implementation of the track system 100. Elements of the track system 300 that are similar to those of the track system 100 have been labeled with the same reference numerals and will not be described herein in more detail.

The primary wheel 104 (not shown in Figures 11 and 12, to maintain clarity) of the track system 300 is rotationally supported by the sub-frame 302 of the track system 300 to rotate about the rotation axis 130, similar to the track system 100. Similar to the track system 100, the sub-frame 302 is in turn supported by the frame 304 of the track system 300. Also similar to the track system 100, an endless track 122 (not shown, to maintain clarity) is supported around the primary wheel 104, the leading idler wheels 116, the mid-rollers 118, and the trailing idler wheels 120 and is in driving engagement with the primary wheel 104 to be driven thereby.

One difference between the track system 300 and the track system 100 is that the frame 304 of the track system 300 does not define a recess that receives the sub-frame 302 therein. The sub-frame 302 of the track system 300 is received on a planar upwardly-facing surface 306 of the frame 304 and the sub-frame 302 is bolted to the frame 304. The bolts 125 of the track system 300 are received through corresponding ones of elongated apertures 308, 310 defined through the sub-frame 302, and in corresponding ones of threaded apertures 312, 314 defined in the frame 304. In this implementation, the head of each of the bolts 125 is positioned on a corresponding one of two upwardly-facing surfaces 316, 318 of the sub-frame 302.

Similar to the track system 100, the elongated apertures 308, 310 are dimensioned to allow the frame 304 to pivot relative to the sub-frame 302 and also define the pivot range of the frame 304 relative to the sub-frame 302. The frame 304 is thus pivotable relative to the sub-frame 302 from a neutral position of the frame 304 to a plurality of different positions when the bolts 125 are loosened or removed, such that the frame 304 could then be re-secured to the sub-frame 302 in any one of the different positions by retightening the bolts 125. An example of a different position of the frame 304 relative to the sub-frame 302 is shown in Figure 12.

Similar to the track system 100, the track system 300 includes a pivot pin 320 that is positioned between the sub-frame 302 and the frame 304. The pivot pin 320 is received in an aperture 322 defined in the frame 304 and a corresponding aperture (not shown) defined in the sub-frame 302. In this implementation, the corresponding aperture defined in the sub-frame 302 is a mirror image of the aperture 322, and is therefore not shown. In this implementation, the pivot pin 320 is cast from metal and is a piece separate from the sub-frame 302 and the frame 304. The pivot pin 320 defines the pivot axis 324 of the frame 304 and maintains the pivot range of the frame 304 centered about the pivot axis 324 when the position of the frame 304 relative to the sub-frame 302 is being adjusted as described herein above.

The various components of the non-limiting implementations of the track systems described herein above are made of conventional materials (e.g., for structural components, metals and metal alloys in most cases, such as steel; for the endless track 122, an elastomeric material, such as rubber) via conventional manufacturing processes (e.g. casting, molding, etc.).

The present technology does not require any specific materials nor methods of manufacture. The present technology merely requires that each component be suitable for the purpose for which it is intended and the use to which it is to be put. Any material(s) or method(s) of manufacture which produce such components may be used in the present technology.

Modifications and improvements to the above-described implementations of the present technology may become apparent to those skilled in the art. The foregoing description is intended to be exemplary rather than limiting.

## Claims

1. A track system (200) for attachment to a vehicle, the track system comprising:
• a primary wheel structured to be rotationally attachable to the vehicle, the primary wheel having an inboard-facing side and an outboard-facing side opposite the inboard-facing side, the inboard-facing side facing toward the vehicle when the primary wheel is rotationally attached to the vehicle;
• a frame (202) rotationally supporting a plurality of secondary wheels, the frame (202) defining a recess (206) therein, the recess (206) having a rearwardly-facing surface (134), a forwardly-facing surface (136) facing the rearwardly-facing surface, and an upwardly-facing surface (204) intermediate the rearwardly-facing surface and the forwardly-facing surface;
• a sub-frame (208) received in the recess (206) of the frame (202), the sub-frame (208) having a downwardly-facing surface (210) that is supported on the upwardly-facing surface (204) of the frame (202), the sub-frame (208) and the rearwardly-facing surface (134) of the frame (202) defining a first gap (150) therebetween, the sub-frame (208) and the forwardly-facing surface (136) of the frame (202) defining a second gap (152) therebetween, the sub-frame (208) rotationally supporting the primary wheel, the primary wheel and the plurality of secondary wheels supporting an endless track around the primary wheel and the plurality of secondary wheels; and
• a fastener (125) securing the frame (202) to the sub-frame (208) in a neutral position, the fastener (125) being disengageable, the first and second gaps being dimensioned to allow the frame (202) to pivot and translate relative to the sub-frame (208) from the neutral position to a plurality of different positions when the fastener (125) is disengaged, the fastener (125) being re-engageable to secure the frame (202) to the sub-frame (208) in any one of the plurality of different positions.

2. The track system of claim 1, wherein the primary wheel is in driving engagement with the endless track.

3. The track system of claim 1 or 2, wherein:
• the downwardly-facing surface (210) of the sub-frame (208) is planar;
• the upwardly-facing surface (204) of the frame (202) is planar; and
• the downwardly-facing surface (210) of the sub-frame (208) is received on the upwardly-facing surface (204) of the frame (202) when the frame (202) is secured to the sub-frame (208) in any one of the plurality of different adjustment positions.

4. The track system of claim 1, wherein the position of the frame (202) relative to the sub-frame (208) can be adjusted by pivoting the frame (202) relative to the sub-frame (208) and/or translationally moving in longitudinal and/or transverse directions the frame (202) relative to the sub-frame (208).

5. The track system of claim 4, further comprising an adjustment assembly (156, 158) operatively engaging the frame (202) and the sub-frame (208), the adjustment assembly including a threaded member, the threaded member being rotatable relative to the frame (202) and the sub-frame (208) to thereby pivot the frame (202) relative to the sub-frame (208) when the fastener (125) is disengaged.

6. The track system of claim 4, wherein a range of the pivoting and/or longitudinal transverse movement is delimited by sidewalls of the recess (206) engaging sidewalls of the sub-frame (208), and a range of transverse translational movement is limited by a size of larger ones of apertures of sidewalls which engage the fastener (125) after the transverse translational movement.

7. A vehicle including the track system as defined in any of claims 1-6.

## Patentansprüche

1. Kettensystem (200) zur Befestigung an einem Fahrzeug, wobei das Kettensystem Folgendes umfasst:
• ein Primärrad, das aufgebaut ist, um drehbar an dem Fahrzeug befestigbar zu sein, wobei das Primärrad eine nach innen gerichtete Seite und eine nach außen gerichtete Seite gegenüber der nach innen gerichteten Seite aufweist, wobei die nach innen gerichtete Seite in Richtung des Fahrzeugs gerichtet ist, wenn das Primärrad drehbar an dem Fahrzeug befestigt ist;
• einen Rahmen (202), der eine Vielzahl von Sekundärrädern drehbar lagert, wobei der Rahmen (202) eine Aussparung (206) darin definiert, wobei die Aussparung (206) eine nach hinten gerichtete Oberfläche (134), eine nach vorne gerichtete Oberfläche (136), die der nach hinten gerichteten Oberfläche zugewandt ist, und eine nach oben gerichtete Oberfläche (204) zwischen der nach hinten gerichteten Oberfläche und der nach vorne gerichteten Oberfläche aufweist;
• einen Hilfsrahmen (208), der in der Aussparung (206) des Rahmens (202) aufgenommen ist, wobei der Hilfsrahmen (208) eine nach unten gerichtete Oberfläche (210) aufweist, die auf der nach oben gerichteten Oberfläche (204) des Rahmens (202) gelagert ist, wobei der Hilfsrahmen (208) und die nach hinten gerichtete Oberfläche (134) des Rahmens (202) einen ersten Spalt (150) zwischen sich definieren, wobei der Hilfsrahmen (208) und die nach vorne gerichtete Oberfläche (136) des Rahmens (202) einen zweiten Spalt (152) zwischen sich definieren, wobei der Hilfsrahmen (208) das Primärrad drehbar lagert, wobei das Primärrad und die Vielzahl der Sekundärräder eine Endloskette um das Primärrad und die Vielzahl der Sekundärräder lagern; und
• ein Befestigungselement (125), das den Rahmen (202) an dem Hilfsrahmen (208) in einer neutralen Position sichert, wobei das Befestigungselement (125) lösbar ist, wobei der erste und der zweite Spalt so bemessen sind, dass der Rahmen (202) relativ zu dem Hilfsrahmen (208) aus der neutralen Position in eine Vielzahl von unterschiedlichen Positionen schwenken und sich verschieben kann, wenn das Befestigungselement (125) gelöst ist, wobei das Befestigungselement (125) erneut eingreifen kann, um den Rahmen (202) in einer beliebigen der Vielzahl von unterschiedlichen Positionen an dem Hilfsrahmen (208) zu sichern.

2. Kettensystem nach Anspruch 1, wobei das Primärrad in Antriebseingriff mit der Endloskette steht.

3. Kettensystem nach Anspruch 1 oder 2, wobei:
• die nach unten gerichtete Oberfläche (210) des Hilfsrahmens (208) planar ist;
• die nach oben gerichtete Oberfläche (204) des Rahmens (202) planar ist; und
• die nach unten gerichtete Oberfläche (210) des Hilfsrahmens (208) an der nach oben gerichteten Oberfläche (204) des Rahmens (202) aufgenommen ist, wenn der Rahmen (202) in einer beliebigen der Vielzahl von unterschiedlichen Einstellpositionen an dem Hilfsrahmen (208) gesichert ist.

4. Kettensystem nach Anspruch 1, wobei die Position des Rahmens (202) relativ zu dem Hilfsrahmen (208) durch Schwenken des Rahmens (202) relativ zu dem Hilfsrahmen (208) und/oder durch translatorisches Bewegen des Rahmens (202) relativ zu dem Hilfsrahmen (208) in Längs- und/oder Querrichtung eingestellt werden kann.

5. Kettensystem nach Anspruch 4, ferner umfassend eine Einstellbaugruppe (156, 158), die mit dem Rahmen (202) und dem Hilfsrahmen (208) in Wirkeingriff steht, wobei die Einstellbaugruppe ein Gewindeelement beinhaltet, wobei das Gewindeelement relativ zu dem Rahmen (202) und dem Hilfsrahmen (208) drehbar ist, um dadurch den Rahmen (202) relativ zu dem Hilfsrahmen (208) zu schwenken, wenn das Befestigungselement (125) gelöst ist.

6. Kettensystem nach Anspruch 4, wobei ein Bereich der Schwenk-und/oder Längsverschiebungsbewegung durch Seitenwände der Aussparung (206) begrenzt ist, die in Seitenwände des Hilfsrahmens (208) eingreifen, und ein Bereich der Querverschiebungsbewegung durch eine Größe von größeren der Öffnungen der Seitenwände begrenzt ist, die nach der Querverschiebungsbewegung in das Befestigungselement (125) eingreifen.

7. Fahrzeug, welches das Kettensystem nach einem der Ansprüche 1 bis 6 beinhaltet.

## Revendications

1. Système de voie (200) destiné à être fixé à un véhicule, le système de voie comprenant :
• une roue primaire conçue pour être fixée en rotation au véhicule, la roue primaire ayant un côté orienté vers l'intérieur et un côté orienté vers l'extérieur en regard du côté orienté vers l'intérieur, le côté orienté vers l'intérieur étant orienté vers le véhicule lorsque la roue primaire est fixée en rotation au véhicule ;
• un châssis (202) supportant en rotation une pluralité de roues secondaires, le châssis (202) délimitant un évidement (206) en son sein, l'évidement (206) ayant une surface orientée vers l'arrière (134), une surface orientée vers l'avant (136) faisant face à la surface orientée vers l'arrière, et une surface orientée vers le haut (204) intermédiaire entre la surface orientée vers l'arrière et la surface orientée vers l'avant ;
• un sous-châssis (208) reçu dans l'évidement (206) du châssis (202), le sous-châssis (208) ayant une surface orientée vers le bas (210) qui est supportée sur la surface orientée vers le haut (204) du châssis (202), le sous-châssis (208) et la surface orientée vers l'arrière (134) du châssis (202) délimitant un premier espace (150) entre eux, le sous-châssis (208) et la surface orientée vers l'avant (136) du châssis (202) délimitant un second espace (152) entre eux, le sous-châssis (208) supportant en rotation la roue primaire, la roue primaire et la pluralité de roues secondaires supportant une chenille autour de la roue primaire et de la pluralité de roues secondaires ; et
• un élément de fixation (125) fixant le châssis (202) au sous-châssis (208) en position neutre, l'élément de fixation (125) pouvant être désaccouplé, les premier et second espaces étant dimensionnés pour permettre au châssis (202) de pivoter et de se déplacer en translation par rapport au sous-châssis (208) de la position neutre à une pluralité de positions différentes lorsque l'élément de fixation (125) est désaccouplé, l'élément de fixation (125) pouvant être réaccouplé pour attacher le châssis (202) au sous-châssis (208) dans l'une quelconque parmi la pluralité de positions différentes.

2. Système de voie selon la revendication 1, dans lequel la roue primaire est en prise d'entraînement avec la chenille.

3. Système de voie selon la revendication 1 ou 2, dans lequel :
• la surface orientée vers le bas (210) du sous-châssis (208) est plane ;
• la surface orientée vers le haut (204) du châssis (202) est plane ; et
• la surface orientée vers le bas (210) du sous-châssis (208) est reçue sur la surface orientée vers le haut (204) du châssis (202) lorsque le châssis (202) est fixé au sous-châssis (208) dans l'une quelconque parmi la pluralité de positions d'ajustement différentes.

4. Système de voie selon la revendication 1, dans lequel la position du châssis (202) par rapport au sous-châssis (208) peut être ajustée en faisant pivoter le châssis (202) par rapport au sous-châssis (208) et/ou en déplaçant en translation le châssis (202), dans les directions longitudinale et/ou transversale, par rapport au sous-châssis (208).

5. Système de voie selon la revendication 4, comprenant en outre un ensemble d'ajustement (156, 158) venant fonctionnellement en prise avec le châssis (202) et le sous-châssis (208), l'ensemble d'ajustement comportant un élément fileté, l'élément fileté pouvant tourner par rapport au châssis (202) et au sous-châssis (208) pour faire pivoter ainsi le châssis (202) par rapport au sous-châssis (208) lorsque l'élément de fixation (125) est désaccouplé.

6. Système de voie selon la revendication 4, dans lequel une plage du mouvement de pivotement et/ou transversal/longitudinal est délimitée par les parois latérales de l'évidement (206) venant en prise avec les parois latérales du sous-châssis (208), et une plage de mouvement de translation transversal est limitée par une taille des plus grandes ouvertures des parois latérales qui viennent en prise avec l'élément de fixation (125) après le mouvement de translation transversal.

7. Véhicule comportant le système de voie tel que défini dans l'une quelconque des revendications 1 à 6.
